# EUROPÄISCHE PATENTANMELDUNG

(11) **EP 0 614 071 A1**
(43) Veröffentlichungstag der Anmeldung: **07.09.1994**
(21) Anmeldenummer: 94102470.5
(22) Anmeldetag: 18.02.1994
(51) Int. Cl.: G01D 15/00, G01D 9/40, G06K 15/22

(54) **Vorrichtung zum Auszeichnen von CAD-Zeichnungen**

(30) Priorität: 02.03.1993 DE 9302966 U
(71) Anmelder: Naumann, Willi, D-76571 Gaggenau (DE)
(72) Erfinder: Naumann, Willi, D-76571 Gaggenau (DE)
(74) Vertreter: Zipse & Habersack

(57) **Zusammenfassung**

Die Erfindung betrifft eine Vorrichtung zum Auszeichnen von CAD-Zeichnungen mit einem Plotter, bestehend im wesentlichen aus einer in zwei Koordinaten relativ zu einem Zeichnungsträger beweglich geführten Halterung für einen Plotterstift. Die Vorrichtung ist dadurch gekennzeichnet, daß der in einem Gestell (6) angeordnete Zeichnungsträger in Form einer Tafel oder Folie (16) mit einer Oberfläche oder Schicht ausgebildet ist, an der die Farbe des Plotterstiftes (13) nur vorübergehend haftet und mittels einer Löschvorrichtung (17) wieder entfernbar ist.

## Beschreibung

Die Erfindung betrifft eine Vorrichtung zum Auszeichnen von CAD-Zeichnungen mit einem Plotter, bestehend im wesentlichen aus einer in zwei Koordinaten relativ zu einem Zeichnungsträger beweglich geführten Halterung für einen Plotterstift.

Beim Erstellen von CAD-Zeichnungen, die größer als DIN A-3 sind, wird es schwierig, die komplexen Zusammenhänge der Zeichnungskonstruktion auf dem Monitor deutlich vor Augen zu führen.

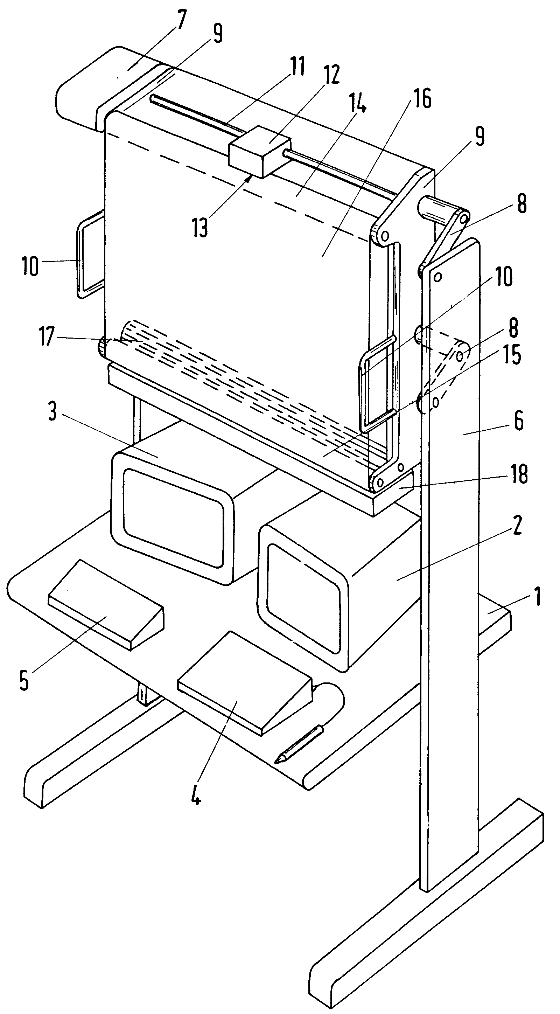

In der Entwurfsphase werden deshalb immer wieder Plotzeichnungen erstellt. Hierzu ist ein großer Papierbedarf erforderlich. Außerdem ist es sehr umständlich, das Papier immer wieder neu einzuspannen. Ferner ist meist wenig Platz zum Aufhängen der ausgeplotteten Zeichnungen vorhanden. Schließlich ist auch das Entsorgen der anfallenden Zeichnungen ein weiterer Nachteil. Infolge der verhältnismäßig kleinen Fläche, auch bei großen Monitoren, kann vor dem Ausplotten die Zeichnung nicht deutlich genug vor Augen geführt werden, und es ist somit eine Kontrolle oder Korrektur der Zeichnung durch den Konstruktionsleiter schwierig.

Der vorliegenden Erfindung liegt die Aufgabe zugrunde, eine Vorrichtung der eingangs genannten Art zu schaffen, mit der in der Entwurfsphase und vor dem endgültigen Ausplotten die komplexen Zusammenhänge deutlich erkannt werden können, ohne daß immer wieder Zeichenpapier verbraucht werden muß.

Die gestellte Aufgabe wird bei der Vorrichtung gemäß der Erfindung dadurch gelöst, daß der in einem Gestell angeordnete Zeichnungsträger in Form einer Tafel oder Folie mit einer Oberfläche oder Schicht ausgebildet ist, an der die Farbe des Plotterstiftes nur vorübergehend haftet und mittels einer Löschvorrichtung wieder entfernbar ist.

Mit der Vorrichtung gemäß der Erfindung wird der wesentliche Vorteil erreicht, daß während der Entwurfsphase die Zeichnung immer in ihrer Gesamtheit dargestellt werden kann, ohne daß die auf Papier ausgeplotteten Zeichnungen aufgehängt werden müssen. Außerdem wird sehr viel Zeichenpapier eingespart, und eine Entsorgung des Zeichenpapiers ist nicht mehr erforderlich. Eine Korrektur und Kontrolle durch den Konstruktionsleiter wird in einfacher Weise möglich.

In den Unteransprüchen sind wertvolle Erweiterungen der Vorrichtung gemäß der Erfindung dargestellt.

Anhand der Zeichnung soll am Beispiel einer bevorzugten Ausführungsform die Vorrichtung gemäß der Erfindung näher erläutert werden.

Die Zeichnung zeigt beispielshalber eine perspektivische Ausführungsform der erfindungsgemäßen Vorrichtung.

Auf einem Arbeitstisch 1 sind zwei Monitore 2 und 3 mit ihren Eingabegeräten 4 und 5 aufgestellt. Oberhalb der Monitore 2, 3 ist in einem Gestell 6 ein Plotter 7 über vier Hebel 8 befestigt. An zwei seitlichen Teilen 9 sind zwei Hebel 10 befestigt, die ein Vorziehen des Plotters 7 in den Arbeitsbereich der Bedienungsperson ermöglichen. Zwischen den beiden Seitenteilen 9 ist an der Oberseite eine Führung 11 vorgesehen, auf der sich die Halterung 12 mit dem Stift 13 länsgsbeweglich befindet und durch das Programm gesteuert wird. Ferner sind zwischen den Seitenteilen 9 eine obere Walze 14 und eine untere Walze 15 angeordnet, zwischen denen ein endlos umlaufendes Folienband 16 angeordnet ist. Die obere Walze 14 treibt dabei entsprechend der Programmsteuerung das Folienband an. Auf diesem Folienband wird dann ebenfalls entsprechend dem Programm die Zeichnung in abwischbarer Weise aufgebracht.

An der Unterseite ist zwischen den beiden Seitenteilen 9 eine Bürste 17, beispielsweise eine Bürstenwalze, angeordnet, die durch entsprechende Steuerung an das Folienband 16 angelegt und durch umlaufende Bewegung desselben die darauf befindlichen Schriftzüge löscht.

Selbstverständlich kann auch die Anordnung in der Weise abgewandelt werden, daß anstelle des umlaufenden Folienbandes eine Tafel vorgesehen wird, die entsprechend dem Programm nach oben oder unten bewegt wird, wobei die bewegliche Halterung 12 für den Stift 13 vor der Tafel angeordnet ist. Die Bürste zum Abwischen der Tafel kann dann in entsprechender Weise über die Tafel bewegt werden.

Ferner kann unter der unteren Walze 15 noch eine Auffangvorrichtung 18 für den durch das Abbürsten mit der Bürste 17 entstehenden Staub angeordnet sein. Diese Anordnung kann auch als Staubsauger ausgebildet werden.

Der Plotter bei der Vorrichtung gemäß der Erfindung kann auch als Tintenstrahlplotter ausgebildet sein, wobei die Tinte oder Tusche so zusammengesetzt ist, daß sie auf der Folie trocken abwischbar ist.

Ferner können mit dem Plotter ohne große Änderungen der Vorrichtung auch technische Reinzeichnungen erstellt werden.

## Patentansprüche

1. Vorrichtung zum Auszeichnen von CAD-Zeichnungen mit einem Plotter, bestehend im wesentlichen aus einer in zwei Koordinaten relativ zu einem Zeichnungsträger beweglich geführten Halterung für einen Plotterstift, **dadurch gekennzeichnet,** daß der in einem Gestell (6) angeordnete Zeichnungsträger in Form einer Tafel oder Folie (16) mit einer Oberfläche oder Schicht ausgebildet ist, an der die Farbe des Plotterstiftes (13) nur vorübergehend haftet und mittels einer Löschvorrichtung (17) wieder entfernbar ist.

2. Vorrichtung nach Anspruch 1, **dadurch gekennzeichnet,** daß zwischen zwei innerhalb eines Gestells (6) angeordneten Seitenteilen (9) über zwei Walzen (14, 15) eine den Zeichnungsträger bildende, endlos umlaufende Folie (16) angeordnet ist, wobei vorzugsweise im oberen Bereich zwischen den Seitenteilen (9) eine auf einer Führung (11) laufende Halterung (12) für den Stift (13) angeordnet ist.

3. Vorrichtung nach Anspruch 1 und 2, **dadurch gekennzeichnet,** daß im unteren oder hinteren Bereich der Folienbahn zwischen den Seitenteilen (9) eine Bürste (17) angeordnet ist, mit der die Schriftzüge von der Folienbahn gelöscht werden können.

4. Vorrichtung nach Anspruch 3, **dadurch gekennzeichnet,** daß der Antrieb der Bürste (17) und der Antrieb der Walze (14) beim Abbürsten der Zeichnungsfarbe durch einen separaten Motor erfolgt.

5. Vorrichtung nach Anspruch 1, 2, 3 oder 4, **dadurch** **gekennzeichnet,** daß die Seitenteile (9) über vier Hebel (8) schwenkbar mit dem Gestell (6) verbunden sind und daß an den Seitenteilen (9) Griffe (10) vorgesehen sind, um die Vorrichtung in den Arbeitsbereich der Bedienungsperson vorziehen zu können.

6. Vorrichtung nach einem oder mehreren der vorhergehenden Ansprüche, **dadurch gekennzeichnet,** daß an der Unterseite der Walze (15) eine Auffangvorrichtung (18) für den durch das Abbürsten mit der Bürste (17) entstehenden Staub angeordnet ist.

7. Vorrichtung nach Anspruch 6, **dadurch gekennzeichnet,** daß die Auffangvorrichtung aus einem Staubsauger besteht.

8. Vorrichtung nach einem oder mehreren der vorhergehenden Ansprüche**, dadurch gekennzeichnet,** daß der Plotter als Tintenstrahlplotter ausgebildet ist, wobei die Tinte oder Tusche so zusammengesetzt ist, daß sie auf der Folie trocken abwischbar ist.
